# EUROPÄISCHE PATENTANMELDUNG

(11) **EP 4 582 651 A2**
(43) Veröffentlichungstag der Anmeldung: **09.07.2025**
(21) Anmeldenummer: 25178537.4
(22) Anmeldetag: 08.04.2021
(51) Int. Cl.: E04F 13/08

(54) **BELAGSYSTEM FÜR EINEN FUSSBODEN, EINE WAND UND/ODER EINE DECKE**

(30) Priorität: 08.04.2020 EP 20168759
(62) Teilanmeldung aus: 21717851.6
(71) Anmelder: Flooring Technologies Ltd., Kalkara SCM1001 (MT)
(72) Erfinder: Dicke, Sebastian, 16868 Bantikow (DE)
(74) Vertreter: Gramm, Lins & Partner Patent- und Rechtsanwälte PartGmbB

(57) **Zusammenfassung**

Die Erfindung betrifft ein Belagsystem (2) für einen Fußboden, eine Wand und/oder eine Decke, wobei das Belagsystem (2) eine Sichtseite (20), eine der Sichtseite (20) gegenüberliegende Unterseite und eine Mehrzahl miteinander verbundener Belagelemente (4) aufweist, wobei wenigstens ein Belagelement (4), vorzugsweise mehrere Belagelemente (4), besonders bevorzugt alle Belagselemente (4) einen Grundkörper (22) und eine lösbar daran befestigte Decklage (24) aufweisen, dadurch gekennzeichnet, dass wenigstens einige der Belagelemente mit einer Fußbodenheizung ausgebildet sind, die über Leitungen zum Leiten eines Wärmetransportmediums aufweist, die in Bohrungen in dem Grundkörper oder zwischen dem Grundkörper und der Decklage angeordnet sind.

## Beschreibung

Die Erfindung betrifft ein Belagsystem für einen Fußboden, eine Wand und/oder eine Decke, wobei das Belagsystem eine Sichtseite, eine der Sichtseite gegenüberliegende Unterseite und eine Mehrzahl miteinander verbundener Belagelemente aufweist, wobei wenigstens ein Belagelement, vorzugsweise mehrere Belagelemente, besonders bevorzugt alle Belagselemente, einen Grundkörper und eine lösbar daran befestigte Decklage aufweisen.

Derartige Belagsysteme sind aus dem Stand der Technik seit langem bekannt und werden verwendet, um Fußböden, Wände und/oder Decken zu verkleiden. Die einzelnen Belagelemente weisen handliche Größen auf und sind in der Regel einfach miteinander verbindbar, indem beispielsweise an den Seitenflächen der Belagelemente vorhandenen Nuten und Federn ineinander eingesteckt werden. Derartige oder andere Verbindungselemente sind mit Verriegelungselementen ausgestattet, sodass die einzelnen Belagelemente sicher miteinander verbunden werden können. Dies ist insbesondere in Form von Laminatpaneelen aus dem Stand der Technik bekannt.

Aus der EP 2 353 821 A1 sind derartige Verriegelungselemente bekannt. Die beiden Paneele, die die Belagelemente bilden, werden dabei so miteinander verbunden, das auf der Sichtseite zwischen den beiden Paneelen ein Spalt verbleibt. In diesem Spalt wird ein Oberflächenelement oder Fugenelement, beispielsweise ein Keder eingesetzt. Dieser ist an der Sichtseite sichtbar und wird als dekoratives Element verwendet.

Ein dekoratives Element ist auch aus der EP 2 221 431 B1 bekannt, das zwischen den beiden Paneelen, die auch bei dem in diesem Dokument beschriebenen Fußboden die Belagelemente bilden, angeordnet ist. In dieser Ausführung erstreckte es sich über die gesamte Dicke des herzustellenden Fußbodenbelages, also von der Sichtseite bis zu der gegenüberliegenden Unterseite. Es wird an dafür vorgesehenen Verbindungselementen an einer Seitenfläche eines der Paneele angeordnet. Auf der von diesem Paneel abweisenden Seite verfügt es über das Verriegelungselement, das in eine Nut eingebracht wird, die an einer Seitenfläche eines benachbarten Paneels angeordnet ist.

Die EP 2 116 778 B1 beschreibt ein anderes Belagsystem. An der Unterseite der einzelnen Belagelemente ist eine Schicht aus einem elektrisch leitfähigen Material angeordnet. Die Verbindungselemente zwischen den einzelnen Belagelementen sind so ausgebildet, dass beim Verbinden der Belagelemente miteinander eine elektrische Verbindung auch zwischen den jeweiligen Schichten aus elektrisch leitfähigem Material hergestellt wird. Die Schichten, die sich im verlegten Zustand auf der Unterseite des gesamten Fußbodens erstrecken, werden später mit elektrischen Strom beaufschlagt und können so als Fußbodenheizung verwendet werden.

Der Erfindung liegt die Aufgabe zugrunde, ein Belagsystem für einen Fußboden, eine Wand und/oder eine Decke so weiterzuentwickeln, dass verschiedene Funktionen in das Belagsystem integrierbar und das Belagsystem auf diese Weise vielseitig einsetzbar ist.

Die Erfindung löst die gestellte Aufgabe durch ein Belagsystem gemäß dem Oberbegriff des Anspruchs 1, das sich dadurch auszeichnet, dass wenigstens einige der Belagelemente mit einer Fußbodenheizung ausgebildet sind, die über Leitungen zum Leiten eines Wärmetransportmediums aufweist, die in Bohrungen in dem Grundkörper oder zwischen dem Grundkörper und der Decklage angeordnet sind.

Eine davon separate Erfindung wird durch ein Belagsystem für einen Fußboden, eine Wand und/oder eine Decke gebildet, wobei das Belagsystem eine Sichtseite, eine der Sichtseite gegenüberliegende Unterseite und eine Mehrzahl miteinander verbundener Belagelemente aufweist, wobei zwischen wenigstens zwei der Belagelemente wenigstens ein Leitungselement derart angeordnet ist, dass das wenigstens eine Leitungselement zumindest abschnittsweise an der Sichtseite sichtbar ist, wobei sich dieses Belagsystem dadurch auszeichnet, dass das wenigstens eine Leitungselement eingerichtet ist zum Leiten einer physikalischen Größe, eines Materials oder von Signalen, wobei wenigstens ein Leitungselement eine Schnittstelle zu einer Quelle oder einem Verbraucher der physikalischen Größe, des Materials oder der Signale aufweist. Bei einem solches Belagsystem weisen vorzugsweise wenigstens ein Belagelement, vorzugsweise mehrere Belagelemente, besonders bevorzugt alle Belagselemente, einen Grundkörper und eine lösbar daran befestigte Decklage auf. Vorzugsweise sind wenigstens einige der Belagelemente mit einer Fußbodenheizung ausgebildet, die über Leitungen zum Leiten eines Wärmetransportmediums aufweist, die in Bohrungen in dem Grundkörper oder zwischen dem Grundkörper und der Decklage angeordnet sind.

Durch die Ausgestaltung des Belagsystems lässt sich die zu leitende physikalische Größe, das Material oder das Signal entlang des Belagsystems an nahezu jede gewünschte Stelle des Fußbodens, der Wand und/oder der Decke leiten. Dies ist beispielsweise die Stelle, an der ein Verbraucher für die zu leitende physikalische Größe, das Material oder das Signal angeordnet ist. Da das Leitungselement von der Sichtseite des Belagsystems aus sichtbar ist, kann es zudem als Dekorelement verwendet werden und ist leicht zugänglich. In einer bevorzugten Ausgestaltung ist das Leitungselement auch im verlegten Zustand des Belagsystems austauschbar und kann beispielsweise für Wartung oder Reparatur aus dem Belagsystem entfernt und später wieder eingesetzt werden. Dafür ist es von Vorteil, wenn die benachbarten Belagelemente, zwischen denen das Leitungselement angeordnet ist, im verlegten und miteinander verbundenen Zustand eine Nut oder Rille, im allgemeinen also eine von der Sichtseite aus zugängliche Vertiefung bilden. In dieser kann das wenigstens eine Leitungselement angeordnet werden, sodass es von der Sichtseite aus sichtbar und zugänglich ist. Dadurch können auch bestehende Belagsysteme, die über eine solche Vertiefung, Rille oder Nut in ihrer Sichtseite verfügen, nachgerüstet werden.

Dass das wenigstens eine Leitungselement zwischen den zwei Belagelementen angeordnet ist, bedeutet insbesondere, dass auf zwei gegenüberliegenden Seiten des Leitungselementes jeweils ein Belagelement angeordnet ist. Es bedeutet insbesondere nicht, dass sich die beiden Belagelemente ansonsten nicht berühren dürfen, oder dass das wenigstens eine Leitungselement vollständig zwischen den beiden Belagelementen angeordnet ist. Es ist durchaus von Vorteil, wenn die Belagelemente, beispielsweise Paneele mit einem Kern aus Holzwerkstoff, insbesondere MDF, HDF oder OSB, zueinander korrespondierende Verbindungs- und/oder Verriegelungselemente aufweisen. Diese sind vorzugsweise derart ausgebildet, dass die Verbindungs- und/oder Verriegelungselemente zweier benachbarter Belagelemente ausreichen, die Belagelemente miteinander zu verbinden und in möglichst vielen Richtung relativ zueinander zu verriegeln, sodass eine Bewegung der so miteinander verriegelten Belagelemente relativ zueinander nicht mehr möglich ist.

Das wenigstens eine Leitungselement kann jedoch auch so ausgebildet sein, dass es sich über die gesamte Dicke des Belagsystems, also von der Sichtseite bis zur gegenüberliegenden Unterseite, erstreckt. Vorzugsweise sind Verriegelungs- und/oder Verbindungselemente an dem wenigstens ein Leitungselement angeordnet, die zu einem Verriegelungs- und/oder Verbindungselement an einer Seitenfläche eines Belagelemente korrespondierend ausgebildet sind, sodass die Verbindung und/oder Verriegelung zwischen dem Belagelement und dem Leitungselement erfolgt. Das Leitungselement kann auf der gegenüberliegenden Seite, die dem anderen Belagelemente zugeordnet ist, ebenfalls mit Verriegelungs- und/oder Verbindungselementen ausgebildet sein, mit denen es an dem jeweiligen Belagelement positionierbar ist.

In einer bevorzugten Ausgestaltung verfügt das Belagsystem über wenigstens ein Leitungselement zwischen allen verwendeten Belagelementen. Auf diese Weise kann die physikalische Größe, das Material oder das Signal an nahezu jede Stelle des mit dem Belagsystem versehenen Fußbodens, der Wand und/oder der Decke geleitet werden, ohne dass aufwendig Kabel, Rohrleitungen oder sonstige Elemente verlegt werden müssten. Besonders bevorzugt verfügt das Belagsystem über Schnittstellen der Leitungselemente, die es ermöglichen, Leitungselemente auch zwischen einem Belagelement eines Fußbodens und einem Belagelement einer Wand oder einem Belagelement einer Wand und einem Belagelement einer Decke anzuordnen. Insbesondere können sich Leitungselemente auch von einem Fußboden an eine Wand oder von einer Wand an eine Decke erstrecken. Auf diese Weise kann der gesamte Raum mit der physikalischen Größe, dem Materials oder den Signalen versehen und versorgt werden.

Das wenigstens eine Leitungselement muss nicht auf den Transport einer einzigen physikalische Größe, eines Materials oder einer Art von Signalen beschränkt sein. Vielmehr sind alle Leitungselemente gemeint, die zum Leiten wenigstens einer physikalischen Größe, wenigstens eines Materials und/oder wenigstens einer Art von Signalen eingerichtet sind. So kann beispielsweise das wenigstens eine Leitungselement einen elektrischen Leiter aufweisen oder ein elektrischer Leiter sein, der einerseits zum Leiten elektrischer Energie, also einer physikalischen Größe, und andererseits zum Leiten elektronischer Signale, vorzugsweise sogar gleichzeitig, eingerichtet ist. Dazu können die Signale beispielsweise einer Wechselspannung aufmoduliert werden oder sein. Alternativ oder zusätzlich dazu ist das wenigstens eine Leitungselement mit einer Rohrleitung, vorzugsweise aus einem Metall, ausgestattet. Das Leitungselement ist auf diese Weise eingerichtet zum Leiten einer Flüssigkeit, beispielsweise Wasser, also eines Materials. Sind dann beispielsweise in oder an der Wandung der Rohrleitung isolierte elektrische Leiter in Form beispielsweise von einzelnen Adern angeordnet, ist das Leitungselement auch zum Leiten von elektrischem Strom und/oder elektronischen Signalen eingerichtet.

Vorzugsweise verfügt das Belagsystem über wenigstens zwei Leitungselemente, die jeweils korrespondierende Schnittstellen aufweisen und derart miteinander verbunden sind, dass die physikalische Größe, das Material oder die Signale von einem Leitungselement in ein benachbartes Leitungselement leitbar sind. Besonders bevorzugt verfügt zumindest ein Teil der Leitungselemente über Schnittstellen, mit denen drei oder vier Leitelemente miteinander verbindbar sind. Auf diese Weise können "T"-Kreuzungen sowie herkömmliche Kreuzungen hergestellt werden. Dies ist insbesondere dann von Vorteil, wenn zwischen plattenförmigen Belagelementen nicht nur entlang einer Richtung, sondern entlang zweier unterschiedlicher Richtungen, die bevorzugt senkrecht aufeinander stehen, Leitungselemente vorhanden sein sollen.

Bevorzugt verfügt wenigstens eines der Leitungselemente, bevorzugt alle Leitungselemente, über einen Leiter zum Leiten der physikalischen Größe, des Materials oder der Signale und über eine Deckschicht, wobei die Deckschicht derart angeordnet ist, dass sie an der Sichtseite sichtbar ist. Der eigentliche Leiter zum Leiten der physikalischen Größe, des Materials oder der Signale kann beispielsweise ein Kabel, insbesondere ein Metallkabel oder ein Glasfaserkabel, ein Metallkeder, ein Rohr, eine Rohrleitung oder ein Schlauch sein. Für den Fall, dass durch das wenigstens eine Leitungselement ein dekorativer Effekt hervorgerufen werden soll, der durch den Leiter bereits erreicht wird, ist es von Vorteil, wenn das Leitungselement keine den Leiter überdecken Deckschicht aufweist. Soll jedoch ein anderer dekorativer Effekt hervorgerufen werden, ist die Deckschicht von Vorteil. Sie kann dekorativ gestaltet werden und ist was Farbe, Material und Oberflächenbeschaffenheit angeht, nahezu völlig frei gestaltbar.

Vorzugsweise ist wenigstens ein Leiter, bevorzugt jedoch alle Leiter, mit einem separaten Schnittstellenelement verbunden, an dem eine Schnittstelle zum Verbinden mit einem anderen Leiter angeordnet ist. Ein derartiges Schnittstellenelement verbindet zwei, drei oder vier Leiter miteinander. Natürlich kann auch eine andere Anzahl von Leitern miteinander verbunden werden. Dies ist immer dann sinnvoll, wenn die physikalische Größe, das Material oder das Signal von einem Leiter auf einen oder mehrere andere Leiter verteilt werden soll. Besonders bevorzugt sind zumindest auch Schnittstellenelemente verwendet und vorhanden, die es erlauben, dass zwei Leitungselemente sich kreuzen, ohne dass es zu einem Austausch der physikalischen Größe, des Materials oder der Signale zwischen den beiden Leitungselement kommt. Ein Schnittstellenelement, dass dieses möglich macht, verfügt bevorzugt über wenigstens vier Möglichkeiten, mit einem Leiter verbunden zu werden, wobei die unterschiedlichen Leitungselemente erzeugt werden und die physikalische Größe, das Material oder das Signal nicht von jedem verbunden Leiter in jeden verbunden Leiter übertragen werden kann.

Bevorzugt verfügen mehrere Leitungselemente über eine Schnittstelle zu einer Quelle oder einem Verbraucher der physikalischen Größe, des Materials oder der Signale.

Vorteilhafterweise ist die physikalische Größe Wärme oder elektrischer Strom. Sind die Leitungselemente eingerichtet, Wärme zu transportieren, lässt sich damit eine gezielte Wärmeverteilung in dem Belagsystem erreichen, in dem Leitungselemente nach Bedarf in dem Belagsystem verteilt werden. Handelt es sich bei dem Belagsystem beispielsweise um einen Fußboden, ist es beispielsweise von Vorteil, die hauptlauffähige in einem Zimmer, dessen Fußboden mit dem Belagsystem ausgestattet ist, mit mehr Leitungselement zu versehen als beispielsweise Teile des Belagsystems, die unter einem Schrank oder unter einem Teppich angeordnet sind. Sollen die Leitungselemente nicht zwischen allen Belagelementen angeordnet werden, ist es von Vorteil, wenn sich die Belagelemente, zwischen denen ein Leitungselement angeordnet werden soll, von denen unterscheiden, zwischen denen kein Leitungselement angeordnet werden kann. Bevorzugt verfügen die Belagelemente, zwischen denen ein Leitungselement angeordnet werden kann, über die bereits beschriebene Vertiefung, Rillen oder Nut in der Sichtseite, wenn die Belagelemente miteinander verbunden sind. Belagelemente, zwischen denen kein Leitungselement angeordnet werden soll, verfügen bevorzugt über keine derartige Vertiefung, Rillen oder Nut.

Handelt es sich bei der physikalischen Größe um elektrischer Strom, kann dieser beispielsweise dafür verwendet werden, über einen Ohm'schen Widerstand in Wärme umgesetzt zu werden. Auch dadurch kann eine Fußbodenheizung realisiert werden. Insbesondere bei der Verwendung eines Leitungselementes zum Leiten eines elektrischen Stroms ist es sinnvoll, eine Deckschicht aus einem elektrisch isolierenden Material vorzusehen, um Personen, die auf dem Belagsystem gehen, keine Gefahr auszusetzen. Alternativ oder zusätzlich dazu kann der zu leitende elektrische Strom jedoch auch verwendet werden, um Verbraucher des elektrischen Stroms zu versorgen. Dies kann jegliches elektrische oder elektronische Gerät sein, das mit einer Stromversorgung ausgestattet werden kann oder muss. Eine derartige Ausgestaltung eines Belagsystems kann die Anordnung mehrerer Steckdosen in den Wänden eines Raumes überflüssig machen und insbesondere eine unauffällige und/oder dekorativ ansprechende Versorgung mehrerer elektrischer Geräte mit elektrischen Strom auch dann möglich machen, wenn in den jeweiligen Raum keine ausreichende Anzahl Steckdosen vorhanden ist. Die Verwendung von unschönen, gegebenenfalls gefährlichen Mehrfachsteckdosen kann auf diese Weise verhindert werden.

Alternativ oder zusätzlich dazu ist das wenigstens eine Leitungselement eingerichtet zum Leiten eines Materials. Dabei handelt es sich vorzugsweise um ein Fluid, also eine Flüssigkeit oder ein Gas. Vorzugsweise handelt es sich bei dem Material um eine Flüssigkeit, insbesondere eine wärmetragende Flüssigkeit, beispielsweise ein Thermoöl. Es dient dazu, die mit dem Belagsystem versehene Fläche zu erwärmen und beispielsweise eine Fußbodenheizung zu realisieren. Selbstverständlich kann ein derartiges System auch verwendet werden, um einen Raum zu kühlen, in dem keine erwärmte, sondern ein in der Temperatur abgesenktes Material, insbesondere eine Kühlflüssigkeit, verwendet wird.

Alternativ oder zusätzlich dazu ist das Leitungselement eingerichtet, elektrische, elektronische oder optische Signale zu leiten. Diese können beispielsweise von einem Internetanschluss, beispielsweise einem Router zu einem Computer, Tablet oder sonstigem Gerät übermittelt werden. WLAN-Verstärker können auf diese Weise ersetzt und gleichzeitig die Datenübertragungsrate erhöht und damit die Stabilität des Netzes verbessert werden. Auch andere elektrische oder elektronische Signale, für die ansonsten separate Kabel gelegt werden müssten, können über die Leitungselemente des Belagsystems transportiert und geleitet werden.

Wenn die Leitungselemente einen Leiter mit einem separaten Schnittstellenelement aufweisen, kann das Belagsystem auch an die jeweiligen Abmessungen eines Raumes, der mit dem Belagsystem versehen werden soll, angepasst werden. Sowohl die Belagelemente als auch die Leitungselemente können auf die gewünschte Länge geschnitten werden. Dabei wird von dem Leitungselement der Leiter auf die gewünschte Länge geschnitten und anschließend mit dem jeweils benötigten separaten Schnittstellenelement verbunden.

In einer bevorzugten Ausgestaltung verfügt ein Schnittstellenelement, mit einem solchen Leiter verbindbar ist, nicht nur über die Möglichkeit, mehrere der Leiter miteinander zu verbinden, sondern bevorzugt zudem über eine Schnittstelle für einen Verbraucher oder eine Quelle der physikalischen Größe, des Materials oder der Signale. Auf diese Weise kann der nahezu jeder Stelle des mit dem Belagsystem versehenen Fußbodens, Wand oder Decke der jeweilige Verbraucher angeordnet und ohne störende Kabel, Schläuche oder Rohrleitungen mit der benötigten physikalischen Größe, dem Material oder der Signale versorgt werden.

Vorzugsweise ist wenigstens eine Schnittstelle eine Strom-Steckdose, insbesondere für Schutzkontaktstecker, eine LAN-Steckdose, eine TV- oder Antennensteckdose, eine USB- oder HDMI-Steckdose oder eine Induktionsspule. All diese Schnittstellen ermöglichen es, elektrischen Strom und/oder elektrische oder elektronische Signale von einem Leitungselement oder dessen Leiter an einen Verbraucher oder von einer Quelle an das Leitungselement oder dessen Leiter zu übergeben.

Bevorzugt ist die Deckschicht aus einem elektrisch isolierenden Material hergestellt. Vorzugsweise sind wenigstens zwei Belagelemente mittels wenigstens eines Leitungselementes miteinander verbunden und bevorzugt miteinander verriegelt. Dies bedeutet insbesondere, dass das Leitungselement über Verbindungs- und/oder Verriegelungselemente verfügt, über die es mit beiden zu verbindenden Belagelemente verbunden und/oder verriegelt werden kann.

Das wenigstens eine Leitungselement ist bevorzugt aus einem Metall, beispielsweise Kupfer oder Eisen hergestellt und bevorzugt in Form eines Keders ausgebildet. Alternativ oder zusätzlich dazu ist das Leitungselement aus einem Fasermaterial, beispielsweise Carbonfasern oder Glasfasern hergestellt. Dies ist insbesondere zum Leiten von elektrischen und/oder elektronischen aber auch von optischen Signalen von Vorteil. Eine Verbindung zu einer Hauptquelle, beispielsweise einer Stromversorgung, einer Datenversorgung oder einer Wärmeversorgung, erfolgt vorteilhafterweise am Rand einer Verlegefläche des Belagsystems. Alternativ oder zusätzlich dazu kann diese Verbindung auch insbesondere entlang einer langen Seite der bevorzugt rechteckig ausgebildeten Belagelemente erfolgen. Eine Verbindung an einer kurzen Seite der Belagelemente ist ebenfalls möglich.

Vorteilhafterweise verfügt das Belagsystem über eine Steuereinheit, über die beispielsweise die Menge des zu leitenden Materials, der zu leitenden physikalischen Größe oder der Signale gesteuert werden kann. Das Belagsystem kann bevorzugt an Wärmepumpen, Warmwasserheizelemente und sonstige Niedrigenergieanlagen angeschlossen werden. Auch Versorgungspunkte für kabellose Stromübertragungen können in sämtlichen Bereichen des Belagsystems beispielsweise in Form von Induktionsspule, angeordnet werden. Für die Verwendung als Heizelement kann das Leitelement aus nahezu allen Materialien bestehen, die sich elektrisch erwärmen lassen.

Aus dem Stand der Technik ist es bekannt, Carbonfasern in ein Dekorpapier einzuarbeiten, das als elektrisch leitfähiges Papier bei Fußboden-Paneel verwendet werden kann. Dies ist ebenfalls aus der EP 2 770 104 B1 bekannt. Durch die erfindungsgemäße Ausgestaltung kann über das wenigstens eine Leitungselement ein elektrischer Kontakt zu diesen Carbonfasern hergestellt und so eine Stromversorgung auch in einer großen Ausgestaltung des Belagsystems sichergestellt werden.

In einer konkreten Ausführungsform kann das Leitungselement an eine 220V Stromversorgung angeschlossen sein. Das Material des Leitungselementes besteht in diesem Fall aus Material, welches sich besonders gut mit Strom erwärmen lässt - z.B. aus einer stark wärmeabgebenden Carbonlitze (Carbonfasern), welche beispielsweise mit einem schadstofffreien temperaturfesten Silikon ummantelt ist. An der Sichtseite, also am Kontaktpunkt zur Raumluft, kann die Carbonlitze mit einer robusten Keramik-Oberfläche (z.B. PolyVison) für maximale Wärmeabgabe von Wärmewellen beschichtet sein. Die Farbe und damit der dekorative Effekt ist frei wählbar. Über ein Raumthermostat, einen Trafo oder andere Regler kann die Stromzufuhr und dadurch die Raumtemperatur geregelt werden. In Bereichen, in denen Kontakt zu Personen möglich sein kann (z.B. Fußboden) kann die Oberflächentemperatur durch Sensoren reguliert werden. Bevorzugt erfolgt eine Abschaltung bei 38 °C. Fällt die Temperatur unter 25 °C Oberflächentemperatur, wird wieder eingeschaltet. Weiterhin kann die Oberflächenbeschichtung aus Stahl, Naturstein oder anderen wärmeabstrahlenden Materialien bestehen. Nach unten hin, also von der Sichtseite weg, ist die Carbonfaser bevorzugt sehr gut durch das Belagelement (z.B. Holzwerkstoff) isoliert und gibt die Wärme hauptsächlich direkt an die Oberfläche/Raumluft ab. Bei guter Raumisolierung werden ca. 50 Watt pro Quadratmeter an Heizleistung benötigt um eine angenehme Raumtemperatur zu erzeugen. Für eine Wohnung mit beispielsweise 60 Quadratmetern werden folglich ca. 3000 W benötigt. Bei einer Belagelementgröße von 140x20cm ergeben sich ca. 215 Belagelemente mit etwa 300 m Leitungselementen an den langen Seiten. Es werden dementsprechend ca. 10 Watt pro Meter benötigt. Der Querschnitt der Leitungselemente und bevorzugt deren Leiter kann entsprechend angepasst werden.

In einer anderen Ausführungsform ist das wenigstens eine Leitungselement an eine externe Wärmeversorgung angeschlossen. Dabei ist es so ausgeformt, dass in einem Hohlraum beispielsweise erwärmtes Wasser (ca. 20-38 °C) über eine Zirkulationspumpe aus einer Wärmepumpenanlage/Warmwasseranalgen fließt. Das erwärme Wasser erwärmt wiederum das Material des wenigstens einen Leitungselementes und dieses gibt die Wärme an die Raumluft ab. Bevorzugt ist das Material des wenigstens einen Leitungselementes im oberen Bereich, also zur Sichtseite hin, an der der Kontakt zur Raumluft stattfindet, besonders gut wärmeleitend und in Richtung der Belagelemente, also von der Sichtseite weg, aus isolierenden Materialien. Über Raumthermostate oder andere Regler kann der Durchfluss und dadurch die Raumtemperatur geregelt werden.

In einer weiteren Ausführungsform wird das wenigstens eine Leitungselement an eine 220V Stromversorgung angeschlossen. Das Material des wenigstens einen Leitungselementes besteht in diesem Fall aus Material, welches elektrischen Strom leitet. Die Anordnung ist so ausgeführt, dass eine Senderspule entsteht. Verbraucher, die eine Empfängerspule enthalten, können auf die Senderspule gelegt/gestellt werden, um induktiv Energie für Aufladung oder Verbrauch zu übertragen. Über einen Trafo oder andere Regler kann die Stromzufuhr geregelt werden. Dadurch kann sicher punktuell innerhalb der von dem Belagsystem überdeckten Fläche Strom für Verbraucher abgenommen werden, beispielsweise für Mobiltelefone, LED Lampen, Ladestationen oder sonstige Verbraucher.

In einer weiteren Ausführungsform wird das wenigstens eine Leitungselement an eine 220V Stromversorgung angeschlossen. Das Material des wenigstens einen Leitungselementes besteht in diesem Fall aus Material, welches elektrischen Strom oder elektronische Daten leitet. Über einen Trafo oder andere Regler kann die Stromzufuhr geregelt werden. An Punkten des Leitungselementes, beispielweise je Belagelement einmal, können Abnahmestellen integriert (beispielsweise Mini USB-Schnittstelle, Strom-Steckdose, Kopfhöreranschlüsse, LAN-Steckdose, TV- oder Antennendosen) Diese können an der Sichtseite durch einen Deckel vor äußeren Einflüssen wie Feuchtigkeit geschützt sein.

In einer weiteren Ausführungsform wird das wenigstens eine Leitungselement an einen WLAN-Router angeschlossen. Das Material des Leitungselementes besteht in diesem Fall aus Material, welches Signale eines Routers weiter senden kann (beispielsweise einem Metall, bevorzugt Blech). Am Rand der durch das Belagsystem überdeckten Fläche wird ein Koaxialkabel angeschlossen, welches mit dem Router verbunden werden kann.

Vorzugsweise verfügt das Belagsystem über eine Quelle der physikalischen Größe, des Materials oder der Signale aufweist, die mit der Schnittstelle verbunden ist. Die wenigstens eine Schnittstelle und/oder die Schnittstellen des wenigstens einen Schnittstellenelementes sind vorzugsweise als Formschlusselement ausgebildet, wobei Formschlusselemente vorzugsweise dann als korrespondierend angesehen werden, wenn sie miteinander eine formschlüssige Verbindung eingehen können.

Zwei oder mehr benachbarte Leitungselemente können vorzugsweise miteinander verbunden werden. Dies kann über die bereits beschriebenen separaten Schnittstellenelemente oder über in die Leitungselemente integrierte Schnittstelleneinrichtungen erreicht werden. Dabei können die Leitungselemente so miteinander verbunden werden, dass die jeweilige physikalische Größe und/oder das Material und/oder die Signale von einem Leitungselement in ein benachbartes Leitungselement geleitet werden können. Alternativ kann die Verbindung aber auch durch Funktionselemente erreicht werden. Diese können als separate Bauteile oder in die Leitungselemente integriert ausgebildet sein.

Die Funktionselemente sind bevorzugt eingerichtet, den Fluss der physikalischen Größe, des Materials und/oder der Signale zu beeinflussen. Funktionselemente können beispielsweise eingerichtet sein, den Fluss zu unterbrechen. Sie können dafür als Schalter oder Ventil ausgebildet sein. Sie können den Fluss auch verstärken und dafür beispielsweise als Pumpelement oder Verstärker ausgebildet sein. Die Funktionselemente sind bevorzugt miteinander und/oder einer zentralen Steuerung, beispielsweise einer elektronischen Datenverarbeitungseinrichtung verbunden. Diese ist besonders bevorzugt eingerichtet, den Gesamtfluss durch das Belagsystem zu steuern, indem sie die einzelnen Funktionselemente betätigt.

Das Belagsystem gemäß der vorliegenden Erfindung verfügt in der Regel für eine Mehrzahl von Belagelementen, die miteinander verbunden und verriegelt sind. An der Sichtseite sind sie mit einem Dekor versehen, das auf eine Schicht, beispielsweise einem Kern oder einem Dekorpapier aufgedruckt ist. Es sind auch Belagsysteme bekannt, die zusätzlich eine Fußbodenheizung gegebenenfalls mit einer Unterdämmung, Heizschleifen und Estrichbeton oder einem Fußbodenheizsystem, das unter den Belagelementen verlegt wird. In allen diesen Ausgestaltungen ist ein Wechsel des Motivs des Dekors nicht oder nur mit großem Aufwand möglich. Es müsste oftmals das gesamte Belagsystem aufgenommen und ein neues Belagsystem mit neuem Dekor verlegt werden.

Daher weisen die Belagelemente vorzugsweise einen Grundkörper und eine lösbar mit dem Grundkörper verbundene Decklage auf. Diese Ausgestaltung von Belag-elementen ist auch unabhängig von den hier bisher beschriebenen Ausführungsformen des Belagsystems von Vorteil und bildet eine eigenständige Erfindung. Dies betrifft insbesondere Belagsysteme der hier beschriebenen Art, die keine Leitungselemente aufweisen. Diese unabhängige betrifft folglich ein Belagsystem für einen Fußboden, eine Wand und/oder eine Decke, wobei das Belagsystem eine Sichtseite, eine der Sichtseite gegenüberliegende Unterseite und eine Mehrzahl miteinander verbundener Belagelemente aufweist. Die in einem solchen Belagsystem oder einem Belagsystem der bisher beschriebenen Art verfügen über den Grundkörper und die Decklage.

Vorzugsweise ist die Decklage der Belagelemente auch im verlegten Zustand des Belagsystems von dem jeweiligen Grundkörper der Belagselemente lösbar.

Der Grundkörper verfügt vorzugsweise über einen Kern aus einem Holzwerkstoff, beispielsweise einer HDF-Platte oder einer Spanplatte. Auch andere Werkstoffe sind verwendbar, wie beispielsweise Vinyl, Kork, Echtkork oder an anderes Material. Vorzugsweise mit Verlegeprofilen ausgestattet, um benachbarte Belagelemente miteinander zu verbinden und zu verriegeln. Die Oberfläche des Grundkörpers, die der Decklage zugewandt ist, kann farblich so gestaltet sein, dass sie einen Einfluss auf die optische Gestaltung und die ästhetische Anmutung des Belagsystems hat. Insbesondere ist vorzugsweise auf der Oberfläche bereits ein Standarddekor aufgebracht.

Vorteilhafte Formate sind beispielsweise 25 cm x 140 cm, 28 cm x 220 cm oder 15 cm x 50 cm.

Die Decklage ist vorzugsweise für sichtbares Licht transparent ausgebildet. Auf diese Weise ist ein auf der Oberfläche des Grundkörpers aufgebrachtes Motiv oder Dekor, beispielsweise das Standarddekor durch die Decklage hindurch sichtbar. Die Decklage kann auch eingefärbt sein und so beispielsweise nur für eine bestimmte Farbe transparent ausgebildet sein.

Vorzugsweise verfügt die Decklage über mehrere Lagen, die bevorzugt aus unterschiedlichen Materialien gebildet sind. Es hat sich als vorteilhaft herausgestellt, wenn eine die Sichtseite der Belagelemente bildende Lage abriebfeste Eigenschaften aufweist. Dazu können beispielsweise einem Kunststoff oder Kunstharz Zusätze, beispielsweise Co. Rundpartikel, beigemischt werden, die die Abriebfestigkeit erhöhen. Alternativ oder zusätzlich kann diese Schicht aus einem abriebfesten Material, beispielsweise Makrolon oder Polycarbonat hergestellt sein. Eine andere Lage der Decklage, die die dem Grundkörper zugewandte Seite bildet, weist vorteilhafter Weise geräuschhemmende Eigenschaften auf und es dazu bevorzugt weicher ausgebildet. Für diese Lage kann beispielsweise einen Silikon oder ein Elastomer verwendet werden.

Die Decklage ist vorzugsweise wenigstens 0,5 mm, bevorzugt wenigstens 1 mm und höchstens 5 mm, bevorzugt höchstens 2 mm dick. Ihre Oberfläche kann matt oder glänzend und/oder mit einer Struktur, beispielsweise einer Nachbildung einer Holzmaserung, ausgebildet sein. Alternativ oder zusätzlich dazu kann auch die dem Grundkörper zugewandte Unterseite der Decklage beispielsweise graviert oder geprägt sein und eine Struktur aufweisen. Ist die Decklage transparent ausgebildet, hat auch diese Struktur einen optischen Einfluss. Vorzugsweise ist die dem Grundkörper zugewandte Unterseite der Decklage mit einem Dekor bedruckt.

In einer bevorzugten Ausgestaltung befindet sich zwischen dem Grundkörper und der Decklage eine Motivschicht. Diese kann beispielsweise als eine Papierlage, beispielsweise mit 1 Grammatur von 50 g/Quadratmeter bis 100 g/Quadratmeter. Die Papierlage ist vorzugsweise mit dem Motiv des Dekors bedruckt und so positioniert, dass das Dekor durch die Decklage hindurch sichtbar ist, wenn die Belagelemente verlegt sind.

Besonders bevorzugt sind der Grundkörper und/oder die Decklage so ausgebildet, dass sich zwischen ihnen ein Hohlraum bildet, der vorzugsweise bis zu 2 mm, bevorzugt zu 1 mm, hoch ist. Zwischen dem Grundkörper und der Decklage können so Materialien angeordnet werden, um die ästhetische Anmutung der Belagelemente zu verändern. Dies können beispielsweise Blätter, Sand oder Pulver sein. Ist die Motivschicht nur stellenweise relativ dick, ist es von Vorteil, Ausgleichselemente zu verwenden, die zwischen den einzelnen Dekorelementen, die zwischen dem Grundkörper und der Decklage angeordnet werden, positioniert werden. In den Hohlraum können unterschiedlichster Dekorelemente, beispielsweise Fotos, Collagen oder sonstige Elemente wie beispielsweise Echtholz-Furniere eingelegt werden.

Vorzugsweise ist die dem Grundkörper zugewandte Lage oder Seite der Decklage ausgebildet, Höhenunterschiede und/oder Unebenheiten auszugleichen, die beispielsweise von Dekorelementen hervorgerufen werden, die zwischen dem Grundkörper und der Decklage angeordnet sind.

In einer bevorzugten Ausgestaltung wird die Decklage mit dem Grundkörper durch eine formschlüssige Verbindung, vorzugsweise eine Rast-Verbindung verbunden. Besonders bevorzugt laufen die Rastelemente um den Umfang des Grundkörpers und der Decklage um. Vorzugsweise lässt sich die Verbindung beispielsweise durch ein Vakuum, also einen Ansaugeffekt, oder durch mechanischen Einflusslösen. Alternativ oder zusätzlich dazu können magnetische Partikel im Grundkörper und/oder in der Decklage vorhanden sein. Dabei ist es ausreichend, wenn im Grundkörper oder der Decklage magnetische Partikel und dem jeweils anderen Element, also der Decklage oder dem Grundkörper, magnetisierbare Partikel vorhanden sind. Die magnetischen und/oder magnetisierbare Partikel können homogen über die Oberflächen verteilt oder inhomogen, beispielsweise in den Randbereichen, angeordnet sein.

Besonders bevorzugt ist die Verbindung zwischen der Decklage und dem Grundkörper so ausgebildet, dass sie den Raum zwischen der Decklage und dem Grundkörper gegen das Eindringen von Staub und/oder Flüssigkeiten abdichtet. Dazu kann beispielsweise die Kante der Decklage, also deren Randbereich, und/oder der des Grundkörpers mit einem Elastomer oder einem anderen Dichtmaterial beschichtet sein.

Durch die Verwendung von Belagelementen mit einem Grundkörper und einer Decklage wird es beispielsweise möglich, einen Motivwechsel eines am Fußboden verlegten Belagsystems zu erreichen, wie anhand eines Beispiels gezeigt wird: Zunächst werden Belagelemente verlegt, die einen Grundkörper mit einem Kern aus einer HDF-Platte aufweisen. Der Grundkörper misst 25cm x 180cm und weist eine Dicke von 10mm auf. Die Grundkörper können nach Anforderung bereits zusätzlich mit einen imprägnierten Dekorpapier, beispielsweise einem Nussbaumdekor und einer Schutzschicht beschichtet werden. Die Grundkörper sind umlaufend profiliert, um die Verbindung zu anderen Paneelen in einer Belagsfläche zu ermöglichen. Diese Profilierung beinhaltet eine umlaufende eine Kerbe oder Nut, welche die Befestigung und Entnahme der Decklage ermöglicht. 42m² dieser Paneele werden in ein Wohnzimmer verlegt. Durch die Decklage ist das vom Hersteller bereits verarbeitete Nussbaumdekor zu sehen.

Der Besitzer möchte nach einem Jahr das Motiv wechseln und entscheidet sich für ein Austauschdekor direkt vom Hersteller. Dafür wird fertig zugeschnittenes Dekorpapier passend für diese Belagelemente verwendet. Die Decklagen der Paneele werden mit dem passenden Zubehör entfernt, indem die Sichtseite beispielsweise mit einem Unterdruck beaufschlagt wird. Anschließend werden die neuen Dekorpapierbahnen, die beispielsweise ein Kastanienmotiv aufweisen, direkt auf den Grundkörpern positioniert und en wieder befestigt. Nachdem das Motiv im gesamten Belagsystem ausgetauscht wurde, fällt auf, dass bei einigen Belagselementen ein fehlerhaftes Dekorpapier verwendet wurde, woraufhin diese gegen andere ausgetauscht werden. Es ist also möglich das Dekor ganz oder partiell nach einem gewünschten Zeitraum ausgetauscht werden.

Mit einem Belagsystem, bei dem alle oder zumindest einige der Belagelemente einen Grundkörper und eine lösbar daran angeordnete Decklage aufweisen, kann auch eine sogenannte Mischverlegung erzeugt werden. Derartige Belagelemente werden auch als motivflexible Belagelemente bezeichnet. Dazu wird beispielsweise in einem Raum ein Belagsystem, beispielswiese eine Fußbodenlaminat mit Buchendekor in 10mm Stärke verlegt. Innerhalb dieser Fläche werden in selber Stärke und Verbindungsart einige motivflexible Belagelemente verlegt. Nun können diese individuell beispielsweise mit selbst erstellten Bilder und Grafiken zu befüllen.

Auch eine Neuaufteilung eines bestehenden Raumes ist durch diese Belagsysteme einfach möglich, was am folgenden Beispiel verdeutlich werden soll. Ein 74m² gro-ßes Wohnzimmer wurde mit motivflexiblen Belagelementen, die ein Nussbaumdekor aufweisen, verlegt. Nach 2 Jahren wird Raum neu aufgeteilt und 23m² großer Spielbereich integriert. Um dem diesen auch optisch zu kennzeichnen, wird das Nussbaummotiv in diesem Bereich durch ein kindgerechtes Dekor ersetzt.

Durch motivflexible Belagelemente ist es jedoch nicht nur möglich, das Motiv der Belagelemente zu ändern. Ist in einem Bereich des verlegten Belagsystems beispielsweise durch Abnutzung die Trittfläche unansehnlich geworden, kann in diesem Bereich die Decklage von den einzelnen Belagelementen entfernt und durch eine neue Decklage, die identisch ausgebildet sein kann, ersetzt werden.

Auch für den Fall, dass beispielsweise eine technische Ausstattung eines Raums ersetzt oder ergänzt werden soll, bieten die hier beschriebenen Belagsysteme Vorteile. Dies soll am folgenden Beispiel erläutert werden: in einem Altbau mit 3,70 m hohen Decken soll eine neue Heizung installiert werden, die ihre Energie aus erneuerbaren Energien bezieht. Der Hausbesitzer verlegt ein motivflexibles Belagsystem, dessen Belagelemente im Format 20 cm x 140 cm ausgebildet sind. Das Belagsystem verfügt über Leitungselemente, die in einer Fuge an der Langseite der Belagelemente verlegt sind. Die Leitungselemente sind eingerichtet, warmes Wasser mit einer Vorlauftemperatur von 38°C aus einer Wärmepumpe über eine Querschnittsfläche von 0,5 cm² zu leiten. Die Wärmepumpe des Hausbesitzers wird über eine Erdwärmsonde und Solarstrom versorgt. Die Warmwasserverteilung der Heizkreise erfolgt über Zuleitungen und Wendeschleifen im Sockelleistenbereich. Da die Wärmeabgabe im Winter bei Außentemperaturnen unter -5 C° nicht ausreicht, sind die Belagelemente weiterhin jeweils mit 5 weiteren Warmwasserleitungen im Kern des Grundkörpers in einer Richtung parallel zur Langseite ausgestattet. Auch diese verfügen jeweils über eine Querschnittsfläche von je 0,5 cm². Diese zusätzlichen Warmwasserleitungen erhöhen die verfügbare Heizleistung bei Bedarf um 500%. Jeder Raum besitzt ein Thermostat für die Raumklimaregulierung. Weiterhin lässt sich das Dekor durch die abnehmbare Decklage austauschen.

Gemäß einem anderen Beispiel werden in einem Raum werden Belagelemente in einem Format von 25 cm x 186 cm verlegt. Zunächst werden die der Grundkörper vollflächig verlegt. Die Oberflächen der Grundkörper, die der Decklage zugewandt sind, wurden je um den halben Querschnitt des Leitungselements und Löchern in regelmäßigen Abständen von 20 cm ausgefräst. An dem Leitungselement, das in die so entstandene Nut eingelegt wird, sind in regelmäßigen Abständen von 20 cm Befestigungspunkte in Form von Haken in Richtung des Grundkörpers und der Decklage befestigt, wobei die Haken 4 mm lang sind. Die Haken der Leitungselemente werden zuerst in die Grundkörper verriegelt. Anschließend wird die Decklage des Grundkörpers auf die Haken der Leitung verriegelt, so dass eine feste Verbindung der Paneele in Richtung der Leitungselemente entsteht.

Das Leitungselement in Form eines Keders, welcher aus Metall besteht und eingerichtet ist, ein WLAN Signal zu transportieren, besitzt in diesem Fall ebenfalls seitlich und regelmäßigen Abständen Haken, welche die Belagelemente in Richtung der Keder auf der Langseite verriegeln.

Vorzugsweise sind nächstens einige, vorzugsweise jedoch alle, Belagelemente des Belagsystems mit einer Fußbodenheizung ausgebildet. Diese Fußbodenheizung verfügt über Leitungen, durch die ein Wärmetransportmedium geleitet wird, um Wärme an die Belagelemente, die vorzugsweise Fußbodenelemente sind, abzugeben und so beispielsweise einen Raum zu heizen.

In einer ersten Ausgestaltung dieser Fußbodenheizung werden die für die Leitungen notwendigen Bohrungen in den Grundkörper der Belagelemente eingebracht, beispielsweise gebohrt oder gefräst. Dies ist sowohl bei Ausgestaltungen des Belagsystems möglich, die über einen Grundkörper und eine Decklage verfügen, als auch bei Ausgestaltungen, bei denen sich zwischen den einzelnen Belagelementen die beschriebenen Leitungselemente befinden. Natürlich sind Fußbodenheizungen auch bei Belagsystem möglich, bei denen sowohl die Belagelemente über Grundkörper und Decklage verfügen als auch zwischen einzelnen oder allen Belagelementen Leitungselemente angeordnet sind.

Alternativ oder zusätzlich dazu können die Leitungen, die für die Fußbodenheizung nötig sind, auch zwischen dem Grundkörper und der Decklage angeordnet sein. Dabei werden in die der Decklage zugewandte Seite des Grundkörpers und/oder in die dem Grundkörper zugewandte Seite der Decklage Querschnitte oder Teilquerschnitte der Leitungen eingebracht, beispielsweise gebohrt oder gefräst. Werden Decklage und Grundkörper später zusammengeführt und aneinander befestigt, ergeben sich die benötigt Querschnitte. **In** die eingebrachten Querschnitte werden bevorzugt zunächst die Leitungen eingelegt und befestigt. Die Leitungen können beispielsweise als Rohrleitungen, beispielsweise Kupferrohre, ausgebildet sein und bestehen vorzugsweise aus einem Material mit einer hohen Wärmeleitfähigkeit. Die Leitungen werden vorzugsweise am Grundkörper oder an der Decklage befestigt, beispielsweise mit diesen verklebt. Alternativ oder zusätzlich dazu können in den Grundkörper oder in die Decklage Halterungslöcher eingebracht, beispielsweise gebohrt oder gefräst werden, in die Halterungselemente, die vorzugsweise an den Leitungen angeordnet sind, eingebracht werden. So entsteht eine sichere Verbindung zwischen den Leitungen und dem Grundkörper oder der Decklage. Nachdem die Leitungen am Grundkörper oder an der Decklage befestigt wurden, wird das jeweils andere Bauteil, also die Decklage oder der Grundkörper, befestigt. Dies kann in unlösbarer Weise, beispielsweise durch Verkleben, geschehen, oder in unlösbarer Weise durch Steck- oder Clipverbindungen oder auf sonstige insbesondere formschlüssige Weise.

Soll ein solches Belagsystem beispielsweise auf einem Fußboden verlegt werden, können bei dieser Konstruktion zunächst die Grundkörper der Belagelemente verlegt werden. Anschließend werden die Leitungen für das gesamte Belagsystem verlegt und an den Grundkörpern befestigt, bevor die Decklagen und gegebenenfalls vorgesehene Leitungselemente angeordnet werden.

Alternative Leitungen können auch in anderer Form vorliegen und beispielsweise nicht rohrförmig ausgebildet sein. So ist es vorzugsweise möglich, die Leitungen so auszubilden, dass sie nahezu oder vollständig der Paneeleoberfläche entsprechen, sodass bevorzugt das verlegte Belagsystem vollflächig Wärmeenergie abgibt. Eine besonders homogene Temperatur beispielsweise einer Trittfläche des Belagsystems, auf der Personen gehen können, wird auf diese Weise erreicht. Die Montage eines solchen Systems kann nach der oben beschriebenen Weise geschehen.

Durch die 2-teilige Ausgestaltung aus Grundkörper und Decklage ist es möglich, unterschiedliche Materialien zu verwenden, die insbesondere unterschiedliche Wärmeleitfähigkeit aufweisen. Während der Grundkörper beispielsweise aus einem Material mit nur geringer Wärmekapazität und/oder geringer Wärmeleitfähigkeit besteht oder hergestellt ist, ist es für die Decklage von Vorteil, wenn sie aus einem Material mit einer möglichst hohen Wärmeleitfähigkeit hergestellt wird. Ähnliches gilt für andere physikalische Eigenschaften, wie beispielsweise die Schalldämmung, die in unterschiedlichen Bereichen des später verlegten Belagsystems unterschiedlich ausgebildet sein können.

Die Ausführungsformen mit Fußbodenheizung sind insbesondere für Gebäude interessant, deren Heizungsanlage mit Niedrigtemperaturanlagen, wie beispielsweise Wärmepumpen, ausgerüstet sind. Sie kommen einer herkömmlichen Fußbodenheizung sehr nahe, sind jedoch beim Verlegen und auch bei der Wartung und der Reparatur deutlich einfacher, schneller und daher kostengünstiger zu handhaben. Auf diese Weise ist es möglich, mit oder ohne verwendeter Leitungselemente einen Raum so zu heizen, dass ein angenehmes Wohnklima entsteht. In Kombination mit der abnehmbaren Decklage ergeben sich weitere Kombinationsmöglichkeiten und Vorteile bei der Wartung und Reparatur und für den Fall, dass ein Dekor oder ein optisches Erscheinungsbild des Fußbodens geändert werden soll.

Mithilfe der beiliegenden Zeichnungen werden nachfolgend einige Ausführungsbeispiele der beschriebenen Belagsysteme näher erläutert. Es zeigt
- Figur 1 -: die schematische Draufsicht auf ein Belagsystem gemäß einem ersten Ausführungsbeispiel,
- Figur 2 -: die schematische Draufsicht auf ein Belagsystem gemäß einem zweiten Ausführungsbeispiel,
- Figur 3 -: die schematische Schnittdarstellung durch zwei verbundene Belagelemente
- Figur 4 -: die schematische Schnittdarstellung durch zwei verbundene Belagelemente und ein einzelnes Belagelement,
- Figur 5 -: schematische Schnittdarstellungen durch Belagelemente mit unterschiedlich ausgebildeten Fußbodenheizungen.

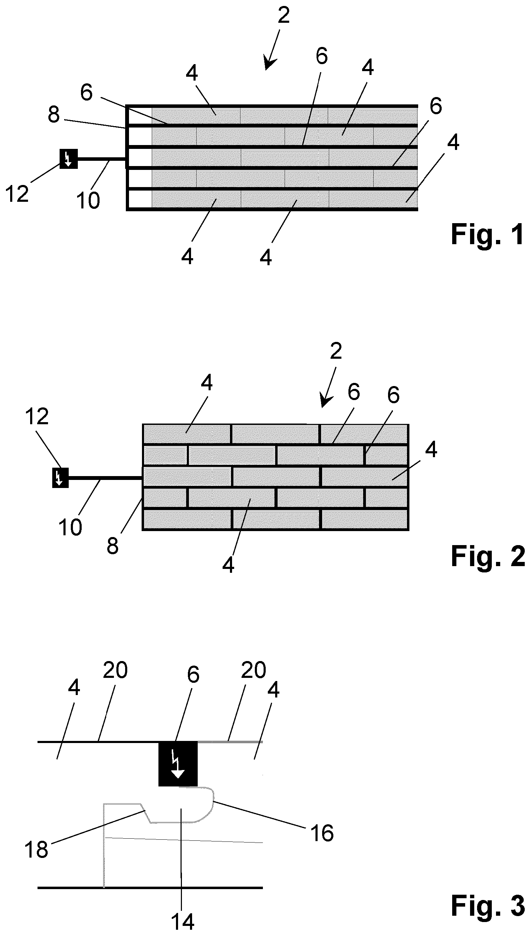

Figur 1 zeigt eine schematische Draufsicht auf ein Belagsystem 2 gemäß einem ersten Ausführungsbeispiel. Es verfügt über eine Vielzahl von Belagelementen 4 in Form von Fußbodenpaneelen. Diese sind rechteckig ausgebildet und verfügen über zwei lange Seiten und zwei kurze Seiten. Entlang der langen Seiten befinden sich Leitungselemente 6, die parallel zueinander angeordnet und durch fett gedruckte Linien dargestellt sind. Entlang einer Stirnseite 8 der durch das Belagsystem 2 überdeckten Fläche sind die verschiedenen Leitungselemente 6 miteinander verbunden, was durch die ebenfalls fett gedruckte Linie dargestellt ist an dieser Stelle befindet sich auch eine Schnittstelle 10 zu einer zentralen Stromversorgung 12.

Figur 2 zeigt eine ähnliche Darstellung. Auch hier sind die einzelnen Belagelemente 4 in Reihen angeordnet und verfügen über lange Seiten und kurze Seiten. Im Unterschied zu Figur 1 sind hier jedoch auch entlang der kurzen Seite Leitungselemente 6 vorhanden, die alle miteinander verbunden sind. Über die Schnittstelle 10 ist jedes der Leitungselemente 6 mit einer zentralen Stromversorgung 12 verbunden.

Figur 3 zeigt einen Schnitt durch 2 verbundene Belagelemente 4 das links dargestellte Belagelement 4 verfügt über eine Feder 14, die in eine dafür vorgesehene Nut 16 des Rechts dargestellten Belagelementes 4 eingeführt wird. Beide gemeinsam bilden auch Verriegelungselemente 18, die ein versehentliches Lösen der beiden Belagelemente 4 voneinander verhindern. An der Sichtseite 20 der beiden Belagelemente 4 befindet sich zwischen den beiden Belagelemente 4 das Leitungselement 6, das im gezeigten Ausführungsbeispiel elektrischen Strom leitet.

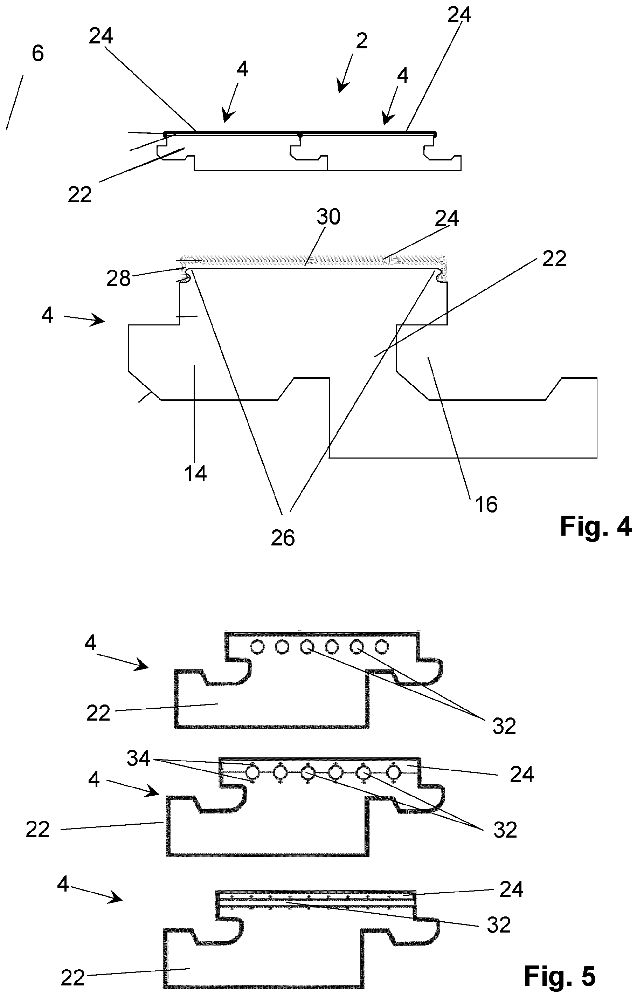

Figur 4 zeigt ein Belagsystem 2. Im oberen Bereich der Figur 4 sind zwei miteinander verbundene Belagelemente 4 dargestellt, die jeweils einen Grundkörper 22 und eine daran angeordnete Decklage 24 aufweisen. Im unteren Teil der Figur 4 ist schematisch eines der Belagelemente 4 vergrößert dargestellt. Der Grundkörper 22 verfügt auf der einen Seite über die Feder 14 und auf der gegenüberliegenden Seite über die Nut 16. Über diese Verriegelung werden zwei benachbarte gleich ausgestaltete Belagelement 4 miteinander verbunden und verriegelt. Die Decklage 24 ist über Formschlusselemente am Grundkörper 22 positioniert. Dazu verfügt der Grundkörper über Rastnasen 26, die in Hinterschneidungen 28 der Decklage 24 eingreifen. So kommt es zur formschlüssigen Verbindung zwischen dem Grundkörper 22 und der Decklage 24. Zwischen der Decklage 24 und dem Grundkörper 22 befindet sich ein Hohlraum 30, in dem Dekorelemente angeordnet werden können.

Figur 5 zeigt drei Schnitte durch jeweils ein Belagelement 4, die jeweils Leitungen 32 für eine Fußbodenheizung aufweisen. Im obersten der 3 gezeigten Ausführungsbeispiele sind die Leitungen 32 in Bohrungen im Grundkörper 22 angeordnet, der einstückig ausgebildet ist. In der mittleren Darstellung hingegen verfügt das jeweilige Belagelement 4 über einen Grundkörper 22 und eine Decklage 24, zwischen denen die Leitungen 32 positioniert sind. Sowohl in dem Grundkörper 22 als auch in der Decklage 24 ist ein Teilquerschnitt der Leitungen 32 eingebracht. Anerkennt, dass zudem Halterungselemente 34 vorhanden sind, die in dafür vorgesehene Bohrungen im Grundkörper 22 und in der Decklage 24 eingreifen. In der untersten Darstellung des Belagelementes 4 befindet sich die Leitung 32 ebenfalls zwischen dem Grundkörper 22 unter Decklage 24, ist jedoch nicht rohrförmig ausgebildet sondern als flächiges Objekt.

### Bezugszeichenliste

- 2: Belagsystem
- 4: Belagelement
- 6: Leitungselement
- 8: Stirnseite
- 10: Schnittstelle
- 12: zentrale Stromversorgung
- 14: Feder
- 16: Nut
- 18: Verriegelungselement
- 20: Sichtseite
- 22: Grundkörper
- 24: Decklage
- 26: Rastnase
- 28: Hinterschneidung
- 30: Hohlraum
- 32: Leitung
- 34: Halterungselement

## Patentansprüche

1. Belagsystem (2) für einen Fußboden, eine Wand und/oder eine Decke, wobei das Belagsystem (2)
- eine Sichtseite (20),
- eine der Sichtseite (20) gegenüberliegende Unterseite und
eine Mehrzahl miteinander verbundener Belagelemente (4) aufweist, wobei wenigstens ein Belagelement (4), vorzugsweise mehrere Belagelemente (4), besonders bevorzugt alle Belagselemente (4) einen Grundkörper (22) und eine lösbar daran befestigte Decklage (24) aufweisen, **dadurch gekennzeichnet, dass** wenigstens einige der Belagelemente mit einer Fußbodenheizung ausgebildet sind, die über Leitungen zum Leiten eines Wärmetransportmediums aufweist, die in Bohrungen in dem Grundkörper oder zwischen dem Grundkörper und der Decklage angeordnet sind.

2. Belagsystem (2) nach Anspruch 1, **dadurch gekennzeichnet, dass** die Decklage (24) aus einem für sichtbares Licht transparenten Material hergestellt ist.

3. Belagsystem (2) nach Anspruch 1 oder 2, **dadurch gekennzeichnet, dass** die Decklage eine abriebfeste Lage, insbesondere aus Makrolon oder Polycarbonat oder mit abriebfesten Partikeln, insbesondere Korund, versehene Schicht ist.

4. Belagsystem (2) nach Anspruch 3, **dadurch gekennzeichnet, dass** die dem Grundkörper (22) zugewandte Lage eine Schalldämmlage ist.

5. Belagsystem (2) nach einem der vorstehenden Ansprüche, **dadurch gekennzeichnet, dass** zwischen dem Grundkörper (22) und der Decklage (24) ein Hohlraum (30) besteht.

6. Belagsystem (2) nach Anspruch 5, **dadurch gekennzeichnet, dass** sich in dem Hohlraum (30) wenigstens ein Dekorelement, beispielsweise ein Dekorpapier, befindet.

7. Belagsystem (2) nach einem der vorstehenden Ansprüche, **dadurch gekennzeichnet, dass** eine der Decklage (24) zugewandte Oberfläche des Grundkörpers (22) mit einem Dekor bedruckt ist.

8. Belagsystem (2) nach einem der vorstehenden Ansprüche, **dadurch gekennzeichnet, dass** der Grundkörper (22) und/oder die Decklage (24) ein Dichtelement aufweist, durch die der Hohlraum (30) abgedichtet ist.
